# EUROPÄISCHE PATENTSCHRIFT

(11) **EP 3 358 488 B1**
(45) Veröffentlichungstag und Bekanntmachung des Hinweises auf die Patenterteilung: **27.01.2021**
(21) Anmeldenummer: 18155237.3
(22) Anmeldetag: 06.02.2018
(51) Int. Cl.: G06F 21/31, H04L 29/06

(54) **VERFAHREN ZUM ERKENNEN VON UNBERECHTIGTEN KOPIEN DIGITALER SICHERHEITS-TOKEN**
METHOD FOR DETECTING UNAUTHORISED COPIES OF A DIGITAL SECURITY TOKEN
PROCÉDÉ DE RECONNAISSANCE DE COPIES NON AUTORISÉES DE JETONS DE SÉCURITÉ NUMÉRIQUES

(30) Priorität: 07.02.2017 DE 102017102336
(43) Veröffentlichungstag der Anmeldung: 08.08.2018
(73) Patentinhaber: Deutsche Post AG, 53113 Bonn (DE)
(72) Erfinder: Lemke, Harald, 21029 Hamburg (DE); Bobinski, Mike, 53113 Bonn (DE); Engelhard, Steven, 53881 Euskirchen (DE)
(74) Vertreter: Michalski Hüttermann & Partner Patentanwälte mbB

(56) Entgegenhaltungen:
- US-A1- 2016 373 430
- US-B1- 9 237 146

## Beschreibung

Die Erfindung betrifft ein Verfahren zum Betreiben eines digitalen Sicherheits-Tokens in einem Datennetz-Endgerät, wobei der digitale Sicherheits-Token zur Authentisierung eines das Datennetz-Endgerät nutzenden Nutzers dient. Die Erfindung betrifft weiterhin ein Datennetz-Endgerät mit einem digitalen Sicherheits-Token, der zur Authentisierung eines das Datennetz-Endgerät nutzenden Nutzers dient und ein Prüfmerkmal aufweist, welches im Datennetz-Endgerät mittels eines Nutzer-Codes gegen unbefugten Zugriff geschützt gespeichert ist.

Elektronische Identitäten werden immer wichtiger, insbesondere wenn sie von fälschungssicheren staatlichen Ausweisdokumenten abgeleitet werden können. Viele existierende Varianten von elektronischen Identitäten werden zentral auf einem Server verwaltet und sind dauerhaft der Bedrohung durch unbefugten Zugriff und Identitätsdiebstahl ausgesetzt. Der Einsatz einer elektronischen Identität ist immer mit einer Authentisierung des Nutzers gegenüber dem Speichermedium seiner Identität verbunden. Eine hohe Authentisierungsstufe erfordert Schutzmaßnahmen gegen unautorisierte Nutzung und unbefugtes Kopieren der Identität, in der Regel Zwei-Faktor-Schutz durch Kombination von Authentisierungsmerkmalen aus zwei unterschiedlichen Bereichen von "Besitz", "Wissen" und "biometrischen Merkmalen".

Ein kopiergeschützter Besitz führt meist zu Lösungen mit speziellem Hardware-Sicherheits-Token, beispielsweise eine Chipkarte, die besondere technische Rahmenbedingungen für einen möglichen Einsatz erfordern und nur wenig Akzeptanz haben. Eine reine Kopplung der Identität an bereits vorhandener Hardware, wie bei der weit verbreiteten mTAN-Lösung durch die Kopplung an die SIM-Karte eines Mobiltelefons, ist problematisch bei gemeinsamer Nutzung, Verlust und Wechsel. Außerdem existieren mehrere Angriffsszenarien auf die Prozesse der Mobilfunkprovider zur unberechtigten Erlangung einer Kopie der SIM-Karte. Im Rahmen dieser Patentanmeldung ist unter einem Sicherheits-Token oder Security-Token eine Hard- und/oder Softwarekomponente zur Identifizierung und Authentifizierung von Nutzer zu verstehen.

Ideal wäre ein gesicherter digitaler Sicherheits-Token, der unter direkter Kontrolle auf bereits vorhandenen, insbesondere mobilen, Endgeräten gespeichert werden kann. Digitale Token lassen sich jedoch nicht wirksam gegen unbefugte Kopie schützen. Werden die Identitätsdaten ausschließlich lokal auf den Endgeräten der Nutzer gespeichert, so betrifft ein Identitätsdiebstahl durch einen Angreifer zumindest nur die direkt betroffenen einzelnen Identitäten und nicht automatisch alle Nutzer des Identitätsdienstes.

Die Druckschrift US 9 413 745 B1 beschreibt ein System und ein Verfahren zum Betreiben eines digitalen Sicherheits-Tokens in einem Datennetz-Endgerät, wobei der digitale Sicherheits-Token zur Authentisierung eines das Datennetz-Endgerät nutzenden Nutzers dient und wobei das Datennetz-Endgerät den Sicherheits-Token von einem Token-Generator eines Servers übermittelt bekommt.

Ausgehend von dieser Situation ist es eine Aufgabe der Erfindung, ein Verfahren zum Betreiben eines Sicherheits-Tokens in einem Endgerät sowie ein entsprechendes Endgerät bereitzustellen, bei denen die Sicherheit erhöht ist.

Die Lösung der Aufgabe erfolgt erfindungsgemäß durch die Merkmale der unabhängigen Ansprüche. Vorteilhafte Ausgestaltungen der Erfindung sind in den Unteransprüchen angegeben.

Bei dem Verfahren zum Betreiben eines digitalen Sicherheits-Tokens in einem Datennetz-Endgerät, bei dem der Sicherheits-Token zur Authentisierung eines das Datennetz-Endgerät nutzenden Nutzers dient, weist das Verfahren die folgenden Schritte auf:
(i) Bereitstellen des Sicherheits-Tokens im Datennetz-Endgerät, wobei der Sicherheits-Token ein Prüfmerkmal aufweist, welches im Datennetz-Endgerät mittels eines Nutzer-Codes gegen unbefugten Zugriff geschützt gespeichert ist und wobei eine Information über das Prüfmerkmal und dessen Verknüpfung mit dem Datennetz-Endgerät bei einem im Datennetz eingebundenen Server hinterlegt ist;
(ii) Überprüfen des Prüfmerkmals durch den Server anhand der Information über das Prüfmerkmal und dessen Verknüpfung mit dem Nutzer im Rahmen einer periodischen Routineüberprüfung, wobei der Server dem Datennetz-Endgerät nur bei Richtigkeit des überprüften Prüfmerkmals ein für den weiteren Betrieb des Sicherheits-Tokens notwendiges neues Prüfmerkmal übermittelt. Das Überprüfen des Prüfmerkmals dient zum Feststellen, ob der Sicherheits-Token im Datennetz-Endgerät berechtigterweise, also mit einer entsprechenden Erlaubnis bzw. Befugnis ausgestattet, genutzt wird. Wird das Vorliegen der Berechtigung festgestellt, so wird das vorhandene Prüfmerkmal gegen das für den weiteren Betrieb des Sicherheits-Tokens notwendige neue Prüfmerkmal ausgetauscht.

Kern der Erfindung ist die folgende Überlegung: Da die unbefugte Kopie eines Sicherheits-Tokens niemals ausgeschlossen werden kann, wird statt eines Kopierschutzes ein System zum Erkennen von Kopien des Sicherheits-Tokens eingesetzt. Der Server ist ein Server eines Identitätsdienstleisters.

Wenn der Sicherheits-Token mit Prüfmerkmal unbefugt kopiert, der Nutzer-Codes entwendet und auf einem anderen Gerät verwendet wird, kann diese Kopie nur solange benutzt werden, bis das Prüfmerkmal auf dem Originalgerät geändert werden soll. Spätestens zu diesem Zeitpunkt wird die unberechtigte Nutzung transparent.

Sollte eine unbefugte Kopie tatsächlich in dem Zeitfenster genutzt werden, so fällt die Nutzung bei der nächsten zyklischen oder anlassbezogenen Prüfung durch das Originalgerät sowohl beim rechtmäßigen Nutzer als auch bei dem den Server zur Verfügung stellenden Identitätsdienstleister auf. In diesem Fall kann der Identitätsdienstleister die Identität sperren, alle vorhergegangenen Identifizierungsvorgänge als mit "Es besteht ein erhöhtes Risiko einer fälschlichen Nutzung" markieren und durch den Nutzer klären beziehungsweise wiederrufen lassen.

Dementsprechend ist gemäß einer bevorzugten Ausführungsform des erfindungsgemäßen Verfahrens vorgesehen, dass das Datennetz-Endgerät bei fehlender Bestätigung der Richtigkeit des überprüften Prüfmerkmals durch den Server die Funktion des digitalen Sicherheits-Tokens sperrt und/oder dem Nutzer einen Hinweis auf eine mögliche nicht-ordnungsgemäße Nutzung des digitalen Sicherheits-Tokens gibt.

Prinzipiell kann der digitale Sicherheits-Token sowohl Hard- als auch Softwarekomponenten aufweisen. Gemäß einer weiteren bevorzugten Ausführungsform des erfindungsgemäßen Verfahrens ist jedoch vorgesehen, dass der digitale Sicherheits-Token ein reiner Software-Token ist. Der reine Software-Token ist beispielsweise durch eine Anwendungssoftware (App: Application Software) für das Datennetz-Endgerät gebildet. Dabei ist mit Vorteil vorgesehen, dass der Server dem Datennetz-Endgerät den dort bereitgestellten digitalen Sicherheits-Token ursprünglich übermittelt hat.

Gemäß einer bevorzugten Ausgestaltung der Erfindung ist der Nutzer-Code
- ein Passwort oder eine andere dem Nutzer bekannte Geheiminformation oder
- ein biometrisches Merkmal des Nutzers.

Gemäß einer bevorzugten Ausgestaltung der Erfindung ist das Prüfmerkmal eine Prüfziffer. Prüfziffern sind besonders einfach handhabbar.

Es ergibt sich beispielsweise folgendes Szenario: Ein Identitätsdienstleister vergibt einen digitalen Sicherheits-Token mit einer Prüfziffer, die beispielsweise durch eine Geheiminformation oder kurz ein Geheimnis geschützt auf dem Datennetz-Endgerät gespeichert wird. Diese Prüfziffer wird zyklisch und bei jeder Benutzung über eine sichere Onlineverbindung durch den Server des Identitätsdienstleisters geprüft und erneuert. Wenn der digitale Sicherheits-Token mit Prüfziffer unbefugt kopiert, das Geheimnis entwendet und auf einem anderen Gerät verwendet wird, kann diese Kopie nur solange benutzt werden, bis die Prüfziffer auf dem Originalgerät geändert werden soll. Spätestens zu diesem Zeitpunkt wird die unberechtigte Nutzung transparent. Sollte eine unbefugte Kopie tatsächlich in dem Zeitfenster genutzt werden, so fällt dieses bei der nächsten zyklischen oder anlassbezogenen Prüfung durch das Originalgerät sowohl beim rechtmäßigen Nutzer des Originalgerätes als auch beim Identitätsdienstleister auf.

Die Erfindung betrifft auch die Verwendung des gemäß des vorstehend genannten Verfahrens betriebenen digitalen Sicherheits-Tokens für eine Transaktion mittels des Datennetz-Endgeräts. Derartige Transaktionen sind unter anderem vom Online-Banking bekannt.

Die Erfindung betrifft weiterhin ein Computerprogrammprodukt umfassend Programmteile, die in einer Computereinheit geladen zur Durchführung des vorstehend genannten Verfahrens eingerichtet sind.

Bei dem Datennetz-Endgerät mit digitalem Sicherheits-Token, welcher zur Authentisierung eines das Datennetz-Endgerät nutzenden Nutzers dient und ein Prüfmerkmal aufweist, welches im Datennetz-Endgerät mittels eines Nutzer-Codes gegen unbefugten Zugriff geschützt gespeichert ist, ist vorgesehen, dass das Endgerät eingerichtet ist,
- dem Server zum Überprüfen des Prüfmerkmals im Rahmen einer periodischen Routineüberprüfung das Prüfmerkmal zu übermitteln und
- das Prüfmerkmal anschließend durch ein vom Server empfangenes neues Prüfmerkmal für den weiteren Betrieb zu ersetzen. Das Datennetz-Endgerät ist dabei insbesondere zur Durchführung des verstehend genannten Verfahrens eingerichtet. Auch an dieser Stelle sei noch einmal angemerkt, dass das Überprüfen des Prüfmerkmals einem Feststellen der berechtigten Nutzung des Sicherheits-Tokens im Datennetz-Endgerät dient, wobei also überprüft wird, ob der Sicherheits-Token im Datennetz-Endgerät mit einer entsprechenden Erlaubnis bzw. Befugnis ausgestattet genutzt wird. Wird bei der Überprüfung das Vorliegen der Berechtigung festgestellt, so wird das vorhandene Prüfmerkmal gegen ein für den weiteren Betrieb des Sicherheits-Tokens notwendiges neues Prüfmerkmal ausgetauscht. Dementsprechend ist das Datennetz-Endgerät ein Datennetz-Endgerät mit digitalem Sicherheits-Token, welcher ein auswechselbares Prüfmerkmal aufweist.

Gemäß einer bevorzugten Ausgestaltung des erfindungsgemäßen Datennetz-Endgerätes ist dieses eingerichtet, bei fehlender Bestätigung der Richtigkeit des überprüften Prüfmerkmals durch den Server die Funktion des digitalen Sicherheits-Tokens zu sperren und/oder dem Nutzer einen Hinweis auf eine mögliche nicht-ordnungsgemäße Nutzung des digitalen Sicherheits-Tokens zu geben.

Nachfolgend wird die Erfindung unter Bezugnahme auf die anliegenden Zeichnungen anhand bevorzugter Ausführungsformen näher erläutert.

Es zeigen
- Fig. 1: ein System zum Betreiben eines digitalen Sicherheits-Tokens in einem Datennetz-Endgerät gemäß einer bevorzugten Ausführungsform der Erfindung,
- Fig. 2: ein Ablaufdiagramm des Prozesses zur Registrierung des Nutzers und zur Initialisierung einer den digitalen Sicherheits-Token bildenden Anwendungssoftware,
- Fig. 3: ein Ablaufdiagramm zur Vergabe eines ID-Datensatzes durch einen Identifizierungsdienstleister und
- Fig. 4: ein Ablaufdiagramm einer Fernidentifizierung des Nutzers durch einen Identitätsempfänger.

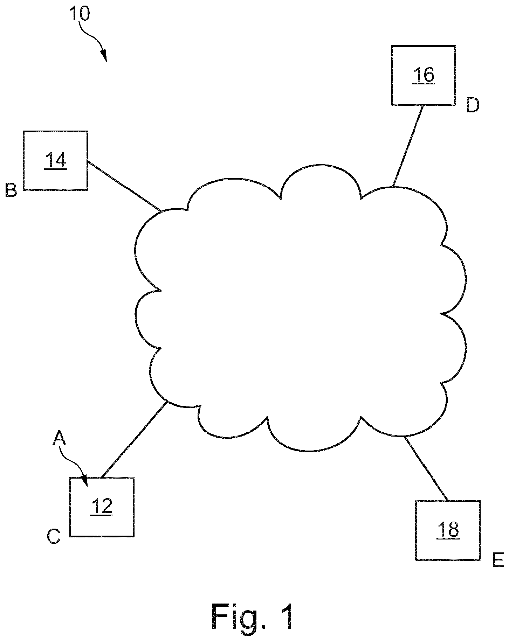

Fig. 1 zeigt ein eine schematische Darstellung eines Systems innerhalb eines Datennetzes 10 zum Betreiben eines digitalen Sicherheits-Tokens in einem in dem Datennetz 10 eingebundenen Datennetz-Endgerät 12 eines Nutzers C. Bei dem Datennetz 10 kann es sich um ein lokales Netzwerk aber auch um das Internet handeln. Das System umfasst neben dem Datennetz-Endgerät 12 auch einen Server 14 eines Identitätsdienstleisters B sowie einen Server 16 eines Identifizierungsdienstleisters D beziehungsweise Identitätserhebers. In der Regel handelt es sich um zwei unterschiedliche im Datennetz 10 eingebundene Server 14, 16. Es sind jedoch auch Fälle denkbar, bei denen es sich um den gleichen Server handelt. Weiterhin ist auch ein Datennetz-Endgerät 18 eines Dritten vermerkt, der bezüglich des Nutzers des Datennetz-Endgeräts 12 ein potentieller Identitätsempfänger E ist.

Im Folgenden sollen diverse Betriebssituationen im Zusammenhang mit dem digitalen Sicherheits-Token anhand von Ablaufdiagrammen beschrieben werden.

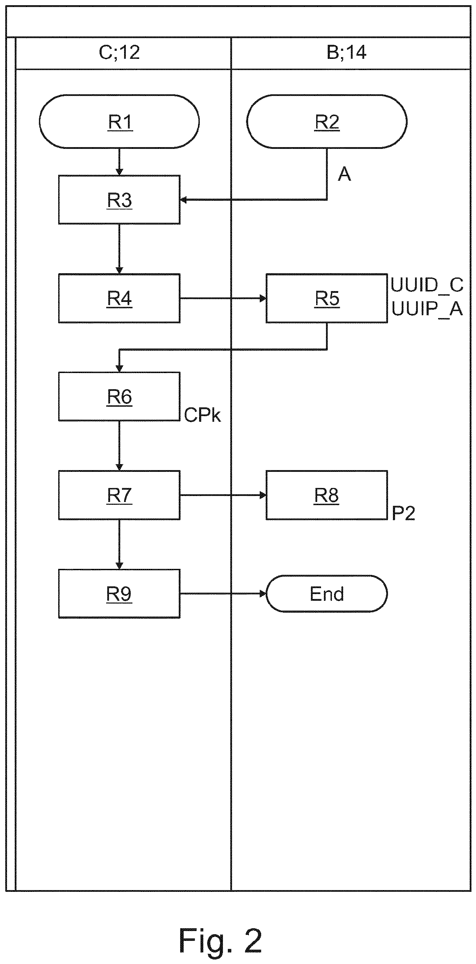

Die Fig. 2 zeigt ein Ablaufdiagramm einer Registrierung des Nutzers C und einer Einrichtung des digitalen Sicherheits-Tokens mit mehreren Schritten R1 - R9. Dabei sind auf der linken Seite die Aktionen im Endgerät 12 des Nutzers und auf der rechten Seite die Aktionen auf dem Server 14 des Identitätsdienstleisters angeordnet.

Es ergeben sich die folgenden Schritte:
Schritt R1: Der Nutzer C registriert sich zunächst beim Identitätsdienst.
Schritt R2: Ein digitales Sicherheits-Token A als Besitzfaktor wird vom Identitätsdienstleister B in Form einer Anwendungssoftware (App) A zur Benutzung durch natürliche Personen bereitgestellt,
Schritt R3: die Anwendungssoftware (App) A wird vom Nutzer C heruntergeladen und auf seinem Endgerät 12 installiert,
Schritt R4: anschließend wird die Initialisierung gestartet, wobei
Schritt R5: ein den Nutzer C identifizierendes ID-Kennzeichen UUID_C sowie ein die installierte Anwendungssoftware A identifizierendes ID-Kennzeichen UUID_A vom Identitätsdienstleister B vergeben wird,
Schritt R6: in der Anwendungssoftware A wird im Rahmen der Installation auf dem Gerät 12 ein Public-Private-Key Paar CPk erzeugt,
Schritt R7: der Private-Key in der Anwendungssoftware A wird durch ein Geheimnis (Passwort) oder ein vom Gerät unterstütztes biometrisches Merkmal (zum Beispiel Fingerabdruck, Iris-Scan, Gesichtserkennung, etc.) des Nutzers C (also einen Nutzer-Code) geschützt und der digitale Sicherheits-Token wird mit dem Public-Key CPk verschlüsselt und auf dem Gerät 12 gespeichert, sowie
Schritt R8: eine vom Identitätsdienstleister B vergebene Prüfziffer Pz wird auf dem Server 14 des Identitätsdienstleisters B gespeichert und
Schritt R9: diese Prüfziffer Pz wird auch in der Anwendungssoftware A gespeichert. Anschließend ist die Anwendungssoftware beziehungsweise der digitale Sicherheits-Token A erfolgreich installiert (End).

2) Die Anwendungssoftware (App) A kommuniziert ausschließlich mit dem Identitätsdienstleister B über eine sichere Verbindung (zum Beispiel SSL) und identifiziert sich dabei mit der UUID_A.
3) Die Anwendungssoftware (App) A fragt zyklisch und/oder bei jeder Nutzung beim Identitätsdienstleister B ab, ob die Prüfziffer Pz noch richtig/gültig ist:
   a) Ist die Prüfziffer Pz richtig, so sendet der Identitätsdienstleister B eine neue Prüfziffer Pz als positive Antwort zurück.
   b) Ist die Prüfziffer falsch, so sendet der Identitätsdienstleister B eine Fehlermeldung zurück und sperrt die Identität.
4) Der Identifizierungsdienstleister D, der die Identität eines Nutzers C erheben soll, wird vor der Einbindung in das System selbst vom Identitätsdienstleister B identifiziert und erhält eine spezifische Client-Software E, die ebenfalls ausschließlich über eine gesicherte Verbindung mit dem Identitätsdienstleister B kommuniziert. Bei der Installation der Client_Sonware E wird
   a) eine identifizierende UUID_CLIENT vergeben,
   b) ein Public-Private-Key Paar erzeugt,
   c) der Public-Key auf dem Server des Identitätsdienstleisters B hinterlegt und
   d) ein beschreibender Klarname dem UUID_CLIENT zugewiesen.

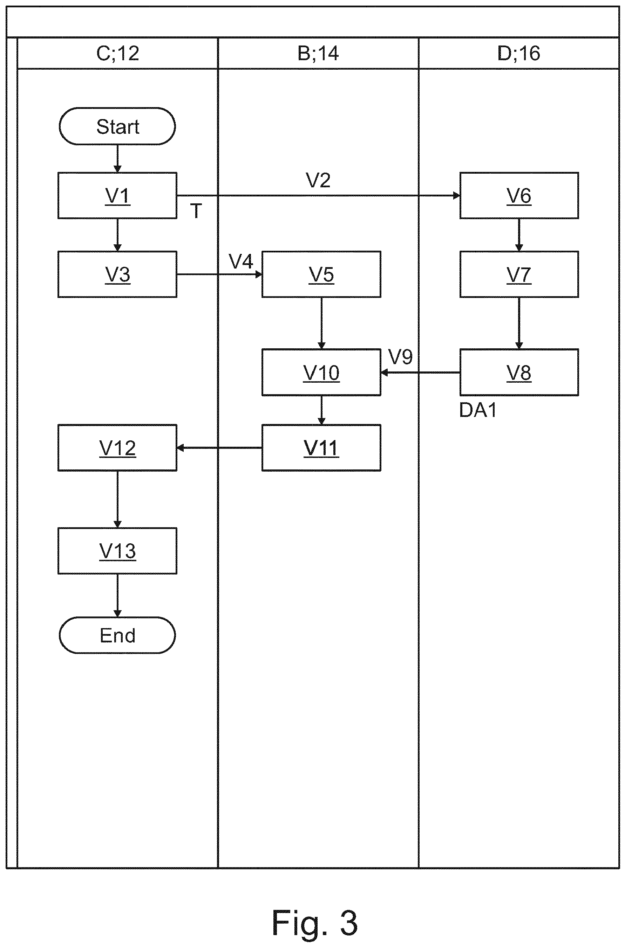

Die Identitätserhebung und Vergabe eines ID-Datensatzes für einen Nutzer C erfolgt durch einen der angebundenen Identifizierungsdienstleister D (siehe Fig. 3). Ein möglicher Identifizierungsdienstleister D kann auch der Identitätsdienstleister B selbst sein. Die bei der Identitätsprüfung des Nutzers C erhobenen Daten werden vom durchführenden Identifizierungsdienstleister D signiert und mit dem Public-Key des Nutzers C verschlüsselt in der Anwendungssoftware (App) A auf dem mobilen Gerät 12 des Nutzers C gespeichert.

Die Vergabe eines ID-Datensatzes an die Anwendungssoftware A bzw. den Nutzer C ist in Fig. 3 dargestellt. Die linke Spalte zeigt Aktionen des Nutzers C, die mittlere Spalte Aktionen des Identitätsdienstleisters B und die rechte Spalte die Aktionen eines Identifizierungsdienstleisters C. Die Identitätserhebung und Vergabe eines ID-Datensatzes für einen Nutzer C erfolgt mittels der folgenden Schritten:
a) Der Prozess wird vom Nutzer C gestartet, in dem er eine Transaktions-ID T generiert (Schritt V1) und dem Identifizierungsdienstleister D über einen unabhängigen Kanal (Ziffer oder QRCode) eine von der Anwendungssoftware (App) A generierte Transaktions-ID T und seinen Public-Key (CPk) mitteilt.
b) Der Nutzer C erstellt einen Datensatz zur Ankündigung des Identifikationsvorganges (Schritt V3) und sendet dem Identitätsdienstleister B durch seine Anwendungssoftware (App) A zur Ankündigung der Identitätsfeststellung (in einem Schritt V4) einen Datensatz CA1 aus
   1. Hashwert der Transaktions-ID T zur Zuordnung der Transaktion
   2. Dem Public-Key (CPk) des Nutzers C,
   3. den mit der Transaktions-ID T verschlüsselter Public-Key CPk des Nutzers C,
   4. die letzte Prüfziffer Pz der Anwendungssoftware (App) A des Nutzers C und
   5. die Signatur von Nutzer C des Datensatzes CA1.
c) Der Identitätsdienstleister (B) prüft in Schritt V5 die Signatur und die Prüfziffer.
d) Ist die Prüfziffer falsch, so wird offensichtlich eine veraltete Kopie des digitalen Sicherheits-Tokens von Nutzer C genutzt, d.h. die Identität ist kompromittiert. Der Identitätsdienstleister B leitet hierauf sofort entsprechende Notfallmaßnahmen ein:
   i) Sperrt die Identität von C,
   ii) sendet eine signierte Sperrmeldung an die Anwendungssoftware A im Endgerät 12,
   iii) beendet die laufende Transaktion,
   iv) prüft, welche Transaktionen im Namen des Nutzers C zwischen der veralteten und der aktuellen Prüfziffer Pz getätigt wurden und kennzeichnet diese als "vorläufig risikobehaftet" und
   v) informiert alle Identitätsempfänger F, die zuvor einen risikobehafteten Identitätsdatensatz des Nutzers C erhalten haben, damit diese im Rahmen ihres Risikomanagements entsprechende Maßnahmen einleiten können.
   vi) Im Falle der Sperrung obliegt es dem Nutzer C sich mit dem Identitätsdienstleister B in Verbindung zu setzen, um den Sachverhalt aufzuklären.
e) Der Identifizierungsdienstleister D erfasst in Schritt V6 die vom Nutzer C bereitgestellte Transaktions-ID T, führt in Schritt V7 die Identitätsfeststellung von Nutzer C durch und erzeugt einen ID-Datensatz DA1 (Schritt V8), in dem jedes Feld einzeln von dem Identifizierungsdienstleister D signiert ist.
f) Der Identifizierungsdienstleister D sendet in einem Schritt V9 dem Identitätsdienstleister B den Datensatz DA1, bestehend aus:
   1. Hashwert der Transaktions-ID T zur Zuordnung der Transaktion,
   2. mit der Transaktions-ID T verschlüsselter Public-Key von D,
   3. mit dem Public-Key CPk des Nutzers C verschlüsselter Klartext ID-Datensatz,
   4. mit dem Public-Key CPk des Nutzers C verschlüsselter IDDatensatz, mit den reinen Hashwerten der einzelnen Datenfelder und
   5. einer Signatur von dem Identifizierungsdienstleister D des Datensatzes.
g) Der Identitätsdienstleister B prüft in Schritt V10 die Signatur und hält den Datensatz DA1 zur Abholung durch den Nutzer C mittels seiner Anwendungssoftware (App) A bereit (Schritt V11). Die korrekte Zuordnung der Daten wird durch die Übertragung des Hashwert der Transaktions-ID sowohl in CA1 als auch in DA1 erreicht.
h) Beim nächsten Kontakt mit dem Nutzer C prüft der Identitätsdienstleister B die aktuelle Prüfziffer Pz. Wenn diese richtig ist, so überträgt der Identitätsdienstleister B den Datensatz BA1 an die Anwendungssoftware (App) A des Nutzers C (Schritt V12) mit
   1. dem Datensatz DA1,
   2. dem Public-Key von dem Identifizierungsdienstleister D,
   3. der Güteklasse der Identifizierung
   4. der Signatur von dem Identitätsdienstleister B des Datensatzes
i) Die Anwendungssoftware (App) A des Nutzers C prüft den Datensatz BA1:
   1) Sind die Signaturen richtig?
   2) Entspricht der mit der Transaktions-ID T verschlüsselte Public-Key von dem Identifizierungsdienstleister D dem unverschlüsselten Public-Key von dem Identifizierungsdienstleister D?
j) Im Falle der positiven Prüfung speichert die Anwendungssoftware (App) A den verschlüsselten ID-Datensatz für zukünftige Identifizierungsvorgänge auf dem Gerät 12 des Nutzers C ab (Schritt V13). Der Nutzer C ist nun erfolgreich identifiziert und die Vergabe des ID-Datensatzes beendet.

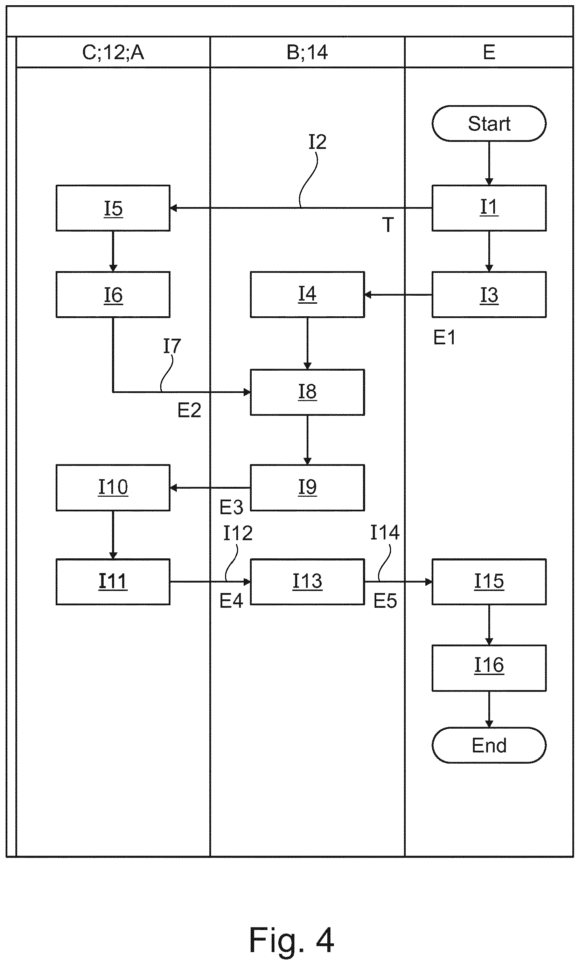

Die Fig. 4 zeigt ein Ablaufdiagramm einer Fernidentifizierung. Die Sicherung der Fernidentifizierung erfolgt sehr analog dem Prozess zur Identitätserhebung aus Fig. 3 durch den angebundenen Identifizierungsdienstleister D und zeigt die generelle Verwendbarkeit der Sicherungsmechanismen des Verfahrens. Die linke Spalte zeigt Aktionen des Nutzers C, die mittlere Spalte Aktionen des Identitätsdienstleisters B und die rechte Spalte die Aktionen eines Identitätsempfängers E.

Die Fern-Identifizierung des Nutzers C bei einem Identitätsempfänger E, beispielsweise einem Geschäftspartner mit Identifizierungsbedarf, erfolgt über den Identitätsdienstleister B:
a) Der Prozess wird vom Identitätsempfänger E gestartet (Start), in dem er über eine Sichtanzeige (Ziffer oder QR-Code) dem Nutzer C bzw. dessen App A eine in einem Schritt I1 generierte Transaktion-ID T mitteilt (Schritt I2).
b) Der Identitätsempfänger E sendet dem Identitätsdienstleister B zur Ankündigung der Identifizierung in Schritt I3 einen zuvor erstellten Datensatz E1 bestehend aus
   1. einem Hashwert der Transaktions-ID T zur Zuordnung der Transaktion,
   2. einem Public-Key des Identitätsempfänger E,
   3. einen mit der Transaktions-ID T verschlüsselter Public-Key von E,
   4. eine Beschreibung der angeforderten Daten und
   5. die Signatur des Datensatzes von Identitätsempfänger E.
   Der Identitätsdienstleister B verifiziert daraufhin in Schritt I4 die Berechtigung des Identitätsempfängers.
c) Der Nutzer C erfasst mit der App A in Schritt I5 die von dem Identitätsempfänger E bereitgestellte Transaktions-ID T, erstellt in Schritt I6 einen Datensatz E2 zur Einleitung der Identifizierung und sendet dem Identitätsdienstleister B in Schritt I7 den Datensatz E2 zu. Dieser Datensatz enthält:
   1. den Hashwert der Transaktions-ID T zur Zuordnung der Transaktion,
   2. die letzte Prüfziffer Pz und
   3.die Signatur von Nutzer C des Datensatzes.
d) Der Identitätsdienstleister B prüft die Signatur und die Prüfziffer Pz und verifiziert darauf die Gültigkeit des Identitätsgebers, also des Nutzers C in Schritt 18.
e) Wenn die Prüfziffer falsch ist, wird offensichtlich eine veraltete Kopie des digitalen Sicherheits-Tokens von B genutzt, d.h., die Identität ist kompromittiert. Identitätsdienstleister B
   i) Sperrt die Identität von Nutzer C,
   ii) sendet eine signierte Sperrmeldung an die Anwendungssoftware A bzw. das entsprechende Endgerät 12,
   iii) beendet die laufende Transaktion,
   iv) prüft, welche Transaktionen im Namen des Nutzers C zwischen der veralteten und der aktuellen Prüfziffer getätigt wurden und kennzeichnet diese als "vorläufig risikobehaftet" und
   v) informiert alle Identitätsempfänger E, die zuvor einen risikobehafteten Identitätsdatensatz des Nutzers C erhalten haben, damit diese im Rahmen ihres Risikomanagements entsprechende Maßnahmen einleiten können.
   vi) Im Falle der Sperrung obliegt es dem Nutzer C sich mit dem Identitätsdienstleister B in Verbindung zu setzen, um den Sachverhalt aufzuklären.
f) Wenn der Nutzer C bekannt und nicht gesperrt ist und die Prüfziffer Pz richtig ist, so sendet der Identitätsdienstleister B in Schritt I9 an den Nutzer C einen Datensatz E3 aus. Dieser umfasst:
   1. Den zuvor vom Identitätsempfänger E an den Identitätsdienstleister B gesendeten Datensatz E1,
   2. Der Klarname von Identitätsempfänger E,
   3. Eine neue Prüfziffer Pz,
   4. Eine Signatur von dem Identitätsdienstleister B des Datensatzes.
g) Daraufhin prüft die Anwendungssoftware (App) A des Nutzers C in einem Schritt I10:
   i) Sind die Signaturen von Identitätsdienstleister B und Identitätsempfänger E richtig?
   ii) Entspricht der mit der Transaktions-ID T verschlüsselte Public-Key von Empfänger E dem unverschlüsselten Public-Key dieses Empfängers E?
   iii) Ist der Nutzer C wirklich gewillt die angeforderten ID-Daten gegenüber dem Identitätsempfänger E zu offenbaren?
h) Im Falle des Einverständnisses des Nutzers C entschlüsselt die App A in einem Schritt I11 den Sicherheits-Token mithilfe des Geheimnisses oder des biometrischen Merkmals des Nutzers C und sendet in einem weiteren Schritt I12 einen Datensatz E4 an den Identitätsdienstleister B. Dieser Datensatz E4 enthält:
   1. den Hashwert der Transaktions-ID T zur Zuordnung der Transaktion,
   2. die letzte Prüfziffer Pz,
   3. die angeforderten Daten mit dem Public-Key des Identitätsempfängers E, verschlüsselten ID-Daten
   4. den mit der Transaktions-ID T verschlüsselter Public-Key des Empfängers E,
   5. den Public-Key von Identitätsempfänger E und
   6. eine Signatur von Nutzer C des Datensatzes.
i) Der Identitätsdienstleister B prüft in einem Schritt I13 die Signatur und die Prüfziffer Pz. Die Fehlerprozedur erfolgt analog dem zuvor genannten Punkt e).
j) Wenn der Nutzer C bekannt und nicht gesperrt ist und die Prüfziffer Pz richtig ist, sendet der Identitätsdienstleister B in einem Schritt 113 an den Empfänger E einen Datensatz E5. Dieser enthält:
   1. Den zuvor von Nutzer C an Identitätsdienstleister B gesendete Datensatz E4 und
   2. Eine Signatur mit Zeitstempel von Identitätsdienstleister B des Datensatzes.
k) Identitätsempfänger E empfängt den Datensatz, prüft und entschlüsselt ihn in einem Schritt 15 und prüft in einem Schritt I16, ob die übergebenen Identifizierungsdaten richtig signiert sind.

Alternativ zur Übertragung der Identitätsdaten in Klartextform ist auch die Anfrage und Übertragung der Hashwerte möglich. Somit kann der Empfänger E die Identität des Nutzers C gegen eine Referenzdatenbank prüfen, ohne das die Identitätsdaten offenbart werden müssen. Dies kann insbesondere bei reinen Abgleichen gegen Positiv- (Mitgliederdatei) oder Negativlisten (Sperrlisten) datenschutzrechtlich von großem Vorteil sein.

Es ergeben sich die folgenden Vorteile der aufgezeigten Lösung:

Allgemein verfügbare Smartphones oder andere bekannte Datennetz-Endgeräte dienen als Träger eines digitalen Sicherheits-Tokens. Die damit verbundene digitale ID kann durch den rechtmäßigen Besitzer, also den Nutzer C, auf ein anderes Gerät übertragen werden.

Die Lösung lässt sich auch auf die parallele Verwendung mehrerer gültiger Geräte 12 unter Kontrolle des rechtmäßigen Nutzers C erweitern. Hierbei können alle Geräte 12 an die eine Person (den Nutzer C) gebunden und die jeweiligen Apps parallel verwendet werden. Dies ist bei der wechselnden Verwendung unterschiedlicher Geräteklassen (Tablett, Smartphone, Desktop PC, ...) durch den Nutzer von essentieller Bedeutung.

Die Sicherheitsstufe der digitalen Identität ist variabel und hängt von der Qualität des eingesetzten Verfahrens der Identitätserhebung und -prüfung, sowie dem Sicherheitsniveau des geprüften Identitätsdokumentes ab. Es können somit von der niedrigsten Stufe, basierend auf einer reinen Selbstauskunft des Nutzers, bis hin zu den höchsten Sicherheitsstufen, wie sie für Identifizierungen bei der Eröffnung von Bankkonten gefordert werden, alle Stufen abgebildet werden. Der Identitätsdienstleister B dient dabei als Garant für die angegebene Güte der Identität, denn er muss die angebundenen Identifizierungsdienstleister D mit Ihren Verfahren entsprechend validieren.

Durch die parallele Speicherung der Identitätsdaten sowohl in Klartext als auch gehasht ist eine pseudonyme Identitätsprüfung durch den Abgleich der Hashwerte ohne Übertragung der Klardaten möglich.

Eine missbräuchliche Nutzung der digitalen Identität durch Dritte ohne Mitwirkung der berechtigten Person wird erheblich erschwert:
- die ID-Daten werden verschlüsselt lokal auf dem Endgerät 12 des Nutzers C gespeichert.
- Der Schlüssel liegt mit einem eigenen Passwort (oder anderem Nutzer-Code) geschützt in der besonders geschützten Key-Chain des Endgerätes 12.
- Ein Diebstahl der ID-Daten erfordert den Besitz des Endgerätes 12 sowie die Kenntnis der PIN des Endgerätes 12.
- Eine Nutzung der digitalen Identität erfordert aber zusätzlich die Kenntnis des Passwortes, mit dem der Zugriff auf den Schlüssel im Endgerät 12gesichert ist.
- Eine unbefugte Nutzung der der digitalen Identität ist aber auch bei einem erfolgreichen Angriff nur über eine begrenzte Zeit möglich:
   (i) wenige Minuten, wenn die rechtmäßige Anwendersoftware A zur Bildung des Sicherheits-Tokens (kurz: ID-App) online ist,
   (ii) spätestens bei der nächsten rechtmäßigen Nutzung der App A durch den Nutzer C .
- Wenn unbefugte Nutzung erkannt wird, können unrechtmäßig durchgeführte Identifizierungen nachträglich widerrufen werden.

Die Lösung bietet aber insgesamt eine gleichwertige Sicherheit wie die eID-Funktion des deutschen Personalausweises. Eine missbräuchliche Weitergabe der digitalen Identität durch den berechtigten Nutzer C kann aber auch durch das beschriebene Verfahren nicht verhindert werden.

**Bezugszeichenliste**

| | |
|---|---|
| Datennetz | 10 |
| Datennetz-Endgerät | 12 |
| Server (Identitätsdienstleister) | 14 |
| Server (Identifizierungsdienstleister/Identitätserheber) | 16 |
| Datennetz-Endgerät | 18 |
| Anwendungssoftware | A |
| Identitätsdienstleister | B |
| Nutzer | C |
| Public-Key des Nutzers | CPk |
| Identifizierungsdienstleister / Identitätserheber | D |
| Client_Software Identitätserheber | E |
| Identitätsempfänger | F |
| Prüfmerkmal, dynamisch wechselnd | Pz |
| Transaktions-ID | T |
| Registrierungsschritte | R1 - R9 |
| Vergabeschritte | V1 - V13 |
| Identifizierungsschritte | I1 - I16 |
| Datensätze | E1 - E5 |
| ID-Datensatz | DA1 |
| ID-Kennzeichen, Nutzer identifizierend | UUID_ C |
| ID-Kennzeichen, Anwendungssoftware identifizierend | UUID_A |

## Patentansprüche

1. Verfahren zum Betreiben eines digitalen Sicherheits-Tokens in einem Datennetz-Endgerät (12), wobei der digitale Sicherheits-Token zur Authentisierung eines das Datennetz-Endgerät (12) nutzenden Nutzers (C) dient und das Verfahren zum Erkennen von unberechtigten Kopien des digitalen Sicherheits-Tokens die folgenden Schritte aufweist:
- Bereitstellen des digitalen Sicherheits-Tokens im Datennetz-Endgerät (12), wobei der digitale Sicherheits-Token ein Prüfmerkmal (Pz) aufweist, welches im Datennetz-Endgerät (12) mittels eines Nutzer-Codes gegen unbefugten Zugriff geschützt gespeichert ist und wobei eine Information über das Prüfmerkmal (Pz) und dessen Verknüpfung mit dem Datennetz-Endgerät (12) bei einem im Datennetz (10) eingebundenen Server (14) hinterlegt ist;
- Überprüfen des Prüfmerkmals (Pz) durch den Server (14) anhand der Information über das Prüfmerkmal (Pz) und dessen Verknüpfung mit dem Nutzer (C) im Rahmen einer periodischen Routineüberprüfung, wobei der Server (14) dem Datennetz-Endgerät (12) nur bei Richtigkeit des überprüften Prüfmerkmals (Pz) ein für den weiteren Betrieb des Sicherheits-Tokens notwendiges neues Prüfmerkmal (Pz) übermittelt, welches das überprüfte Prüfmerkmal (Pz) für den weiteren Betrieb ersetzt.

2. Verfahren nach Anspruch 1, wobei das Datennetz-Endgerät (12) bei fehlender Bestätigung der Richtigkeit des überprüften Prüfmerkmals (Pz) durch den Server (14) die Funktion des digitalen Sicherheits-Tokens sperrt und/oder dem Nutzer (C) einen Hinweis auf eine mögliche nicht-ordnungsgemäße Nutzung des digitalen Sicherheits-Tokens gibt.

3. Verfahren nach Anspruch 1, wobei das digitale Sicherheits-Token ein reines Software-Token ist.

4. Verfahren nach Anspruch 3, wobei der Server (14) dem Datennetz-Endgerät (12) den dort bereitgestellten digitalen Sicherheits-Token ursprünglich übermittelt hat.

5. Verfahren nach Anspruch 1, wobei der Nutzer-Code
- ein Passwort oder eine andere dem Nutzer bekannte Geheiminformation oder
- ein biometrisches Merkmal des Nutzers ist.

6. Verfahren nach Anspruch 1, wobei die Prüfmerkmal (Pz) eine Prüfziffer ist.

7. Verfahren nach Anspruch 1, wobei das Datennetz-Endgerät bei fehlender Bestätigung der Richtigkeit des überprüften Prüfmerkmals durch den Server die Funktion des digitalen Sicherheits-Tokens sperrt und/oder dem Nutzer einen Hinweis auf eine mögliche nicht-ordnungsgemäße Nutzung des digitalen Sicherheits-Tokens gibt und wobei das digitale Sicherheits-Token ein reines Software-Token ist.

8. Verfahren nach Anspruch 7, wobei der Server dem Datennetz-Endgerät den dort bereitgestellten digitalen Sicherheits-Token ursprünglich übermittelt hat.

9. Verfahren nach Anspruch 1, wobei das Überprüfen des Prüfmerkmals (Pz) durch den Server (14) anhand der Information über das Prüfmerkmal (Pz) und dessen Verknüpfung mit dem Nutzer (C) auch im Rahmen der Nutzung des digitalen Sicherheits-Tokens zur Authentisierung des Nutzers (C) erfolgt, wobei der Server (14) dem Datennetz-Endgerät (12) auch hierbei nur bei Richtigkeit des überprüften Prüfmerkmals (Pz) ein für den weiteren Betrieb des Sicherheits-Tokens notwendiges neues Prüfmerkmal (Pz) übermittelt, welches das überprüfte Prüfmerkmal (Pz) für den weiteren Betrieb ersetzt.

10. Verwendung des gemäß des Verfahrens nach Anspruch 1 betriebenen digitalen Sicherheits-Tokens für eine Transaktion mittels des Datennetz-Endgeräts (12).

11. Computerprogrammprodukt umfassend Programmteile, die in einer Computereinheit geladen zur Durchführung des Verfahrens nach Anspruch 1 eingerichtet sind.

12. Datennetz-Endgerät (12) mit einem Sicherheits-Token, der zur Authentisierung eines das Datennetz-Endgerät (12) nutzenden Nutzers (C) dient und der ein Prüfmerkmal (Pz) aufweist, welches im Datennetz-Endgerät (12) mittels eines Nutzer-Codes gegen unbefugten Zugriff geschützt gespeichert ist, wobei das Datennetz-Endgerät (12) dazu eingerichtet ist,
- dem Server (14) zum Überprüfen des Prüfmerkmals (Pz) im Rahmen einer periodischen Routineüberprüfung das Prüfmerkmal (Pz) zu übermitteln und
- das Prüfmerkmal (Pz) anschließend durch ein vom Server (14) empfangenes neues Prüfmerkmal (Pz) für den weiteren Betrieb zu ersetzen.

13. Datennetz-Endgerät nach Anspruch 12, wobei das Datennetz-Endgerät (12) eingerichtet ist, bei fehlender Bestätigung der Richtigkeit des überprüften Prüfmerkmals (Pz) durch den Server (14) die Funktion des digitalen Sicherheits-Tokens zu sperren und/oder dem Nutzer (C) einen Hinweis auf eine mögliche nicht-ordnungsgemäße Nutzung des digitalen Sicherheits-Tokens zu geben.

14. Datennetz-Endgerät nach Anspruch 12 oder 13, wobei das Datennetz-Endgerät zur Durchführung des Verfahrens nach Anspruch 1 eingerichtet ist.

15. Datennetz-Endgerät nach Anspruch 12, wobei das Datennetz-Endgerät (12) weiterhin dazu eingerichtet ist,
- dem Server (14) zum Überprüfen des Prüfmerkmals (Pz) auch im Rahmen der Nutzung des digitalen Sicherheits-Tokens zur Authentisierung des Nutzers (C) zu übermitteln und
- das Prüfmerkmal (Pz) anschließend durch ein vom Server (14) empfangenes neues Prüfmerkmal (Pz) für den weiteren Betrieb zu ersetzen.

## Claims

1. Method for operating a digital security token in a data network terminal (12), wherein the digital security token is used for authenticating a user (C) who is using the data network terminal (12), and the method for detecting unauthorized copies of the digital security token has the following steps:
- provision of the digital security token in the data network terminal (12), wherein the digital security token has a test characteristic (Pz), which is stored in the data network terminal (12) in a manner protected against unauthorized access by means of a user code, and wherein information about the test characteristic (Pz) and its connection to the data network terminal device (12) is stored in a server (14) integrated into the data network (10) ;
- examination of the test characteristic (Pz) by the server (14) based on the information about the test characteristic (Pz) and its connection to the user (C) in the context of a periodic routine examination, wherein the server (14) transmits to the data network terminal (12) a new test characteristic (Pz) which is necessary for the continued operation of the security token and replaces the examined test characteristic (Pz) for continued operation only if the examined test characteristic (Pz) is accurate.

2. Method according to Claim 1, wherein, in the absence of confirmation of the accuracy of the examined test characteristic (Pz) by the server (14), the data network terminal (12) disables the function of the digital security token and/or informs the user (C) of a possible improper use of the digital security token.

3. Method according to Claim 1, wherein the digital security token is a pure software token.

4. Method according to Claim 3, wherein the server (14) has originally transmitted to the data network terminal (12) the digital security token provided there.

5. Method according to Claim 1, wherein the user code is
- a password or another confidential piece of information known to the user or
- a biometric feature of the user.

6. Method according to Claim 1, wherein the test characteristic (Pz) is a check digit.

7. Method according to Claim 1, wherein, in the absence of confirmation of the accuracy of the examined test characteristic by the server, the data network terminal disables the function of the digital security token and/or informs the user of a possible improper use of the digital security token, and wherein the digital security token is a pure software token.

8. Method according to Claim 7, wherein the server has originally transmitted to the data network terminal the digital security token provided there.

9. Method according to Claim 1, wherein the test characteristic (Pz) is also examined by the server (14) based on the information about the test characteristic (Pz) and its connection to the user (C) in the context of the use of the digital security token for authenticating the user (C), wherein the server (14) also in this case transmits to the data network terminal (12) a new test characteristic (Pz) which is necessary for the continued operation of the security token and replaces the examined test characteristic (Pz) for continued operation only if the examined test characteristic (Pz) is accurate.

10. Use of the digital security token operated in accordance with the method according to Claim 1 for a transaction using the data network terminal (12).

11. Computer program product comprising program parts, which are loaded in a computer unit, for carrying out the method according to Claim 1.

12. Data network terminal (12) having a security token, which is used for authenticating a user (C) who is using the data network terminal (12) and has a test characteristic (Pz) which is stored in the data network terminal (12) in a manner protected against unauthorized access by means of a user code, wherein the data network terminal (12) is designed
- to transmit the test characteristic (Pz) to the server (14) for examining the test characteristic (Pz) in the context of a periodic routine examination and
- to subsequently replace the test characteristic (Pz) by a new test characteristic (Pz) received from the server (14) for continued operation.

13. Data network terminal according to Claim 12, wherein the data network terminal (12) is designed, in the absence of confirmation of the accuracy of the examined test characteristic (Pz) by the server (14), to disable the function of the digital security token and/or to inform the user (C) of a possible improper use of the digital security token.

14. Data network terminal according to Claim 12 or 13, wherein the data network terminal is designed to carry out the method according to Claim 1.

15. Data network terminal according to Claim 12, wherein the data network terminal (12) is also designed
- to also transmit to the server (14) for examining the test characteristic (Pz) in the context of the use of the digital security token for authenticating the user (C) and
- to subsequently replace the test characteristic (Pz) by a new test characteristic (Pz) received from the server (14) for continued operation.

## Revendications

1. Procédé d'utilisation d'un jeton de sécurité numérique dans un terminal de réseau de données (12), dans lequel le jeton de sécurité numérique sert à authentifier un utilisateur (C) utilisant le terminal de réseau de données (12), le procédé comprenant, aux fins de la reconnaissance de copies non autorisées du jeton de sécurité numérique, les étapes suivantes :
- la mise à disposition du jeton de sécurité numérique dans le terminal de réseau de données (12), dans lequel le jeton de sécurité numérique présente une caractéristique de contrôle (Pz) qui est stockée dans le terminal de réseau de données (12) de manière protégée contre tout accès non autorisé au moyen d'un code utilisateur et dans lequel une information concernant la caractéristique de contrôle (Pz) et son lien avec le terminal de réseau de données (12) est stockée sur un serveur (14) intégré dans le réseau de données (10) ;
- la vérification de la caractéristique de contrôle (Pz) par le serveur (14) sur la base de l'information concernant la caractéristique de contrôle (Pz) et son association avec l'utilisateur (C) dans le cadre d'une vérification de routine périodique, dans lequel le serveur (14) ne transmet au terminal de réseau de données (12) une nouvelle caractéristique de contrôle (Pz) nécessaire à la poursuite de l'utilisation du jeton de sécurité, qui remplace la caractéristique de contrôle vérifiée (Pz) aux fins de ladite poursuite de l'utilisation, qu'en cas de validité de la caractéristique de contrôle vérifiée (Pz).

2. Procédé selon la revendication 1, dans lequel, en l'absence de confirmation par le serveur (14) de la validité de la caractéristique de contrôle vérifiée (Pz), le terminal de réseau de données (12) inhibe la fonction du jeton de sécurité numérique et/ou donne à l'utilisateur (C) une indication d'une éventuelle utilisation abusive du jeton de sécurité numérique.

3. Procédé selon la revendication 1, dans lequel le jeton de sécurité numérique est un jeton purement logiciel.

4. Procédé selon la revendication 3, dans lequel le serveur (14) a initialement transmis au terminal de réseau de données (12) le jeton de sécurité numérique qui y a été mis à disposition.

5. Procédé selon la revendication 1, dans lequel le code utilisateur est
- un mot de passe ou une autre information secrète connue de l'utilisateur ou
- une caractéristique biométrique de l'utilisateur.

6. Procédé selon la revendication 1, dans lequel la caractéristique de contrôle (Pz) est un chiffre de contrôle.

7. Procédé selon la revendication 1, dans lequel le terminal de réseau de données inhibe la fonction du jeton de sécurité numérique en l'absence de confirmation par le serveur de la validité de la caractéristique de contrôle vérifiée et/ou donne à l'utilisateur une indication d'une éventuelle utilisation abusive du jeton de sécurité numérique et dans lequel le jeton de sécurité numérique est un jeton purement logiciel.

8. Procédé selon la revendication 7, dans lequel le serveur a initialement transmis au terminal de réseau de données le jeton de sécurité numérique qui y a été mis à disposition.

9. Procédé selon la revendication 1, dans lequel la vérification de la caractéristique de contrôle (Pz) par le serveur (14) sur la base de l'information concernant la caractéristique de contrôle (Pz) et son association avec l'utilisateur (C) ont également lieu dans le cadre de l'utilisation du jeton de sécurité numérique aux fins de l'authentification de l'utilisateur (C), dans lequel le serveur (14) ne transmet également au terminal de réseau de données (12) une nouvelle caractéristique de contrôle (Pz) nécessaire à la poursuite de l'utilisation du jeton de sécurité, qui remplace la caractéristique de contrôle vérifiée (Pz) aux fins de ladite poursuite de l'utilisation, qu'en cas de validité de la caractéristique de contrôle vérifiée (Pz).

10. Utilisation du jeton de sécurité numérique utilisé conformément au procédé selon la revendication 1 aux fins d'une transaction au moyen du terminal de réseau de données (12).

11. Produit de programme informatique comprenant des parties de programme chargées dans une unité informatique et sont conçues pour mettre en œuvre le procédé selon la revendication 1.

12. Terminal de réseau de données (12) comprenant un jeton de sécurité qui sert à authentifier un utilisateur (C) utilisant le terminal de réseau de données (12) et qui présente une caractéristique de contrôle (Pz) qui est stockée dans le terminal de réseau de données (12) de manière protégée contre tout accès non autorisé au moyen d'un code utilisateur, dans lequel le terminal de réseau de données (12) est conçu
- pour transmettre au serveur (14) la caractéristique de contrôle (Pz) aux fins de la vérification de la caractéristique de contrôle (Pz) dans le cadre d'une vérification de routine périodique, et
- pour remplacer ensuite la caractéristique de contrôle (Pz) par une nouvelle caractéristique de contrôle (Pz) reçue du serveur (14) aux fins de la poursuite de l'utilisation.

13. Terminal de réseau de données selon la revendication 12, dans lequel, en l'absence de confirmation par le serveur (14) de la validité de la caractéristique de contrôle vérifiée (Pz), le terminal de réseau de données (12) est conçu pour inhiber la fonction du jeton de sécurité numérique et/ou pour donner à l'utilisateur (C) une indication d'une éventuelle utilisation abusive du jeton de sécurité numérique.

14. Terminal de réseau de données selon la revendication 12 ou 13, dans lequel le terminal de réseau de données est conçu pour mettre en œuvre le procédé selon la revendication 1.

15. Terminal de réseau de données selon la revendication 12, dans lequel le terminal de réseau de données (12) est en outre conçu
- pour transmettre également au serveur (14) pour la vérification de la caractéristique de test (Pz) dans le cadre de l'utilisation du jeton de sécurité numérique aux fins de l'authentification de l'utilisateur (C) et
- pour remplacer ensuite la caractéristique de contrôle (Pz) par une nouvelle caractéristique de contrôle (Pz) reçue du serveur (14) aux fins de la poursuite de l'utilisation.
